# FASCICULE DE BREVET EUROPEEN

(11) **EP 1 493 901 B1**
(45) Date de publication et mention de la délivrance du brevet: **26.10.2005**
(21) Numéro de dépôt: 04291500.9
(22) Date de dépôt: 15.06.2004
(51) Int. Cl.: F01D 9/04, F04D 29/54

(54) **Redresseur de compresseur de moteur aéronautique**
Leitschaufelstufe eines Verdichters für einen Luftfahrzeugsmotor
Stator vane of a compressor for an aircraft motor

(30) Priorité: 30.06.2003 FR 0307898
(43) Date de publication de la demande: 05.01.2005
(73) Titulaire: SNECMA, 75015 Paris (FR)
(72) Inventeur: Mons, Claude Marcel, 77176 Savigny Le Temple (FR); Andrieu, Sandra, 77680 Roissy-en-Brie (FR); Girard, Manuel, 77000 Vaux Le Penil (FR); Ribassin, Francois, Pierre, Georges, Maurice, 91100 Villabe (FR)
(74) Mandataire: Rousset, Jean-Claude

(56) Documents cités:
- US-A- 3 268 207
- US-A- 3 393 436
- US-A- 5 560 841
- US-A- 5 732 468

## Description

L'invention concerne un redresseur de compresseur de moteur aéronautique comprenant une virole intérieure, une virole extérieure et une multiplicité d'aubes réparties dans la direction circonférentielle s'étendant radialement de la virole intérieure à la virole extérieure, chaque aube traversant une ouverture correspondante ménagée dans la virole intérieure et étant fixée à cette dernière au moyen d'un ciment étanche contenant un adhésif polymère organique.

Trois techniques sont utilisées actuellement pour fixer les aubes d'un redresseur à la virole intérieure, à savoir un assemblage mécanique par boulonnage ou rivetage, un brasage par des métaux d'apports et un collage par des élastomères de silicone chargés.

À titre d'exemple, US 6 431 830 décrit un redresseur dans lequel les aubes sont fixées à la virole intérieure par brasage.

Les solutions mécaniques sont désavantageuses par leur coût de production élevé ainsi que par leur complexité et leur masse.

La solution par brasage n'est pas toujours applicable, en fonction des matériaux constitutifs des aubes et de la virole. En particulier, lorsque celles-ci sont en titane, le brasage devrait être effectué à des températures très élevées entraînant des déformations prohibitives.

La solution avec élastomère de silicone est bien adaptée, mais la durée de vie de ces élastomères diminue lorsque la température de fonctionnement du compresseur augmente. Ainsi, pour les compresseurs de nouvelle génération fonctionnant à des températures voisines de 300°C en continu dans une ambiance contenant des brouillards d'huile, les colles à base d'élastomère de silicone subissent un effritement qui limite la durée de vie pratique à 100 heures.

Le but de l'invention est de surmonter les inconvénients ci-dessus des techniques de fixation connues.

En particulier, on souhaite obtenir des joints collés utilisables pendant 1000 heures à des températures voisines de 300 °C.

L'invention vise notamment un redresseur du genre défini en introduction, et prévoit que ledit adhésif est à base de polyimide.

Les adhésifs à base de polyimide résistent de manière durable aux atmosphères régnant dans les compresseurs de moteurs aéronautiques. Il est possible de choisir un tel adhésif en fonction de la température de fonctionnement prévue, certains d'entre eux supportant des températures de l'ordre de 300 °C.

Des caractéristiques optionnelles de l'invention, complémentaires ou de substitution, sont énoncées ci-après:
- La virole intérieure et/ou les aubes sont en titane.
- Des régions d'extrémité des aubes font saillie radialement vers l'intérieur au-delà de la virole intérieure.
- Un insert disposé à l'intérieur de la virole intérieure et au voisinage de celle-ci délimite avec la virole intérieure et avec les aubes un volume qui est rempli dudit ciment.
- Ledit insert est sous forme d'une nappe souple.
- La nappe souple forme en regard des extrémités des aubes des poches qui s'éloignent radialement de la virole intérieure.
- La nappe souple est formée de plusieurs éléments se raccordant entre eux dans la direction circonférentielle de la virole intérieure avec recouvrement partiel.
- La nappe souple est un tissu de fibres de verre ou de carbone imprégné de polyimide.
- Ledit insert est sous forme d'une multiplicité de pièces rigides.
- Chacune desdites pièces rigides est interposée entre les régions saillantes de deux aubes consécutives.
- Chacune desdites pièces rigides est montée à force entre lesdites régions saillantes.
- Chacune desdites pièces rigides s'étend sur une longueur d'arc supérieure au pas circonférentiel des aubes.
- Lesdites pièces rigides présentent des ouvertures pour recevoir les régions saillantes des aubes.
- Lesdites pièces rigides sont fixées à la virole intérieure par ledit ciment.
- Lesdites pièces rigides sont en alliage d'aluminium ou de magnésium.
- Ledit ciment est sous forme de film.
- Ledit ciment est sous forme de mousse.
- Ledit adhésif à base de polyimide est propre à résister sans dégradation à une température d'environ 300 °C lors du fonctionnement du redresseur.
- Les aubes sont fixées à la virole extérieure par soudage par faisceau d'électrons.

Les caractéristiques et avantages de l'invention sont exposés plus en détail dans la description ci-après, avec référence aux dessins annexés.

La figure 1 est une vue partielle en demi-coupe axiale d'un étage de compresseur auquel s'applique l'invention, montrant une virole intérieure, une virole extérieure et une aube fixée à celles-ci.

La figure 2 est une partie agrandie de la figure 1, montrant la virole intérieure et les régions de l'aube voisines de celle-ci.

La figure 3 est une vue partielle de la face interne de la virole intérieure, développée à plat en imagination.

La figure 4 est une vue partielle en coupe par un plan perpendiculaire à l'axe du moteur, montrant une partie de la virole intérieure et les régions de pieds des aubes correspondantes, fixés à celles-ci selon un premier mode de réalisation de l'invention.

La figure 5 est une vue analogue à la figure 4 relative à un second mode de réalisation de l'invention.

La figure 6 est une vue analogue aux figures 4 et 5, relative à un troisième mode de réalisation de l'invention et montrant en outre la longueur totale des aubes et une partie de la virole extérieure.

La figure 7 est une vue partielle de la face interne de l'insert de la figure 6, développée à plat en imagination.

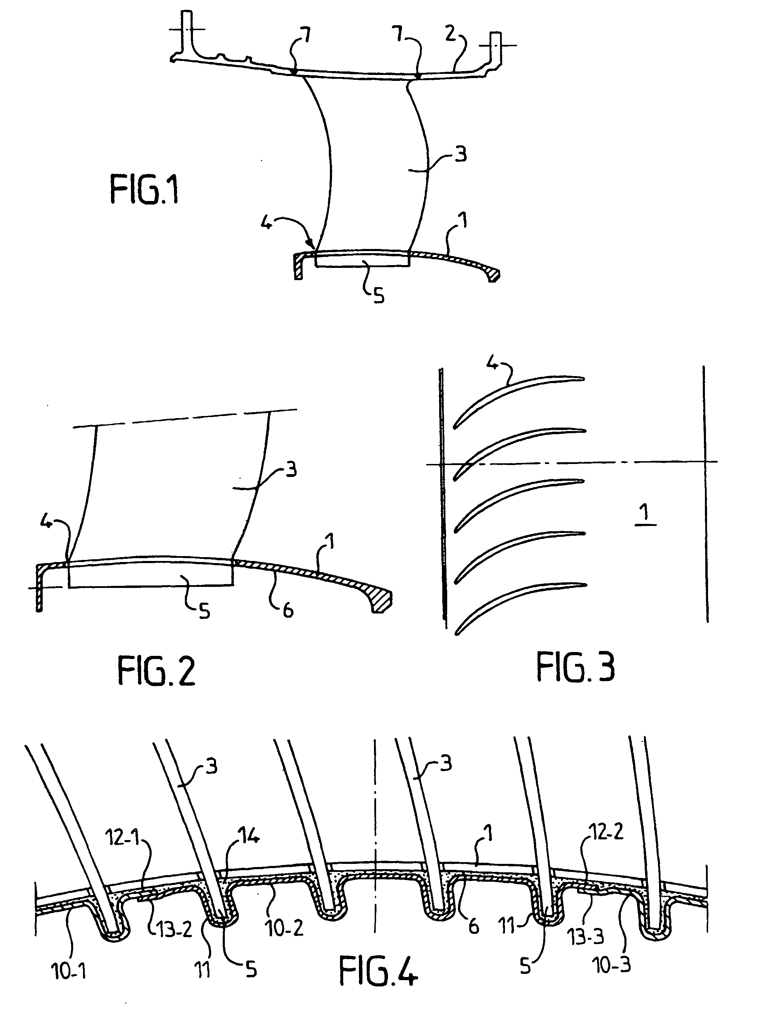

L'étage de redresseur représenté sur les figures 1 à 3 comprend de manière classique une virole intérieure 1 et une virole extérieure 2, toutes deux fixes, et une série d'aubes redresseuses 3 s'étendant dans une direction générale radiale de la virole intérieure à la virole extérieure. Les aubes 3 sont réparties dans la direction circonférentielle, généralement de façon uniforme. La virole intérieure 1 est percée d'ouvertures 4 dont la forme est adaptée au profil des aubes. Chacune d'entre elles est traversée par une aube 3 dont une région d'extrémité 5 fait saillie en direction de l'axe du moteur au-delà de l'ouverture 4 et par conséquent de la face interne 6 de la virole 1. Les aubes 3 sont fixées à la virole extérieure 2 par exemple par des soudures 7 réalisées par faisceau d'électrons.

On décrit ci-après le mode de fixation conforme à l'invention des aubes sur la virole intérieure 1.

Sur la figure 4, la face interne 6 de la virole intérieure 1 et les régions saillantes 5 des aubes 3 sont recouvertes d'une nappe souple formée de plusieurs morceaux de tissu 10-1, 10-2, 10-3 qui se raccordent entre eux et se recouvrent partiellement dans la direction circonférentielle. La nappe souple suit le contour interne défini par la face 6 et par les régions 5 et s'éloigne par conséquent de la virole 1 pour former des poches 11 dans lesquelles sont logées les régions 5. Dans l'exemple illustré, le morceau de tissu 10-2 recouvre les régions d'extrémité 5 de quatre aubes 3, l'une de ses régions marginales, notée 12-2, étant recouverte par une région marginale 13-3 du morceau 10-3, tandis que sa région marginale opposée 13-2 recouvre une région marginale 12-1 du morceau 10-1. Chacune des régions marginales précitées est située entre deux aubes voisines. La nappe souple délimite avec la virole 1 et les aubes 3 un volume annulaire 14 qui est rempli par un film d'une colle à base de polyimide telle que celle commercialisée par la Société Cytec Fiberite Inc. sous la référence FM 680, cette colle remplissant également les jeux entre les aubes 3 et la périphérie des ouvertures 4. La nappe souple 10-1, 10-2, 10-3 est avantageusement formée d'un tissu de fibres de verre ou de carbone imprégné de polyimide.

Pour réaliser la fixation illustrée sur la figure 4, après avoir mis en place les aubes, on enduit de mousse adhésive les régions saillantes 5 de celle-ci et la surface interne 6 de la virole 1, après quoi on applique la nappe souple et on traite l'ensemble à une température de l'ordre de 180 °C pour polymériser l'adhésif, sous une légère pression permettant son adhérence sur les parties à assembler.

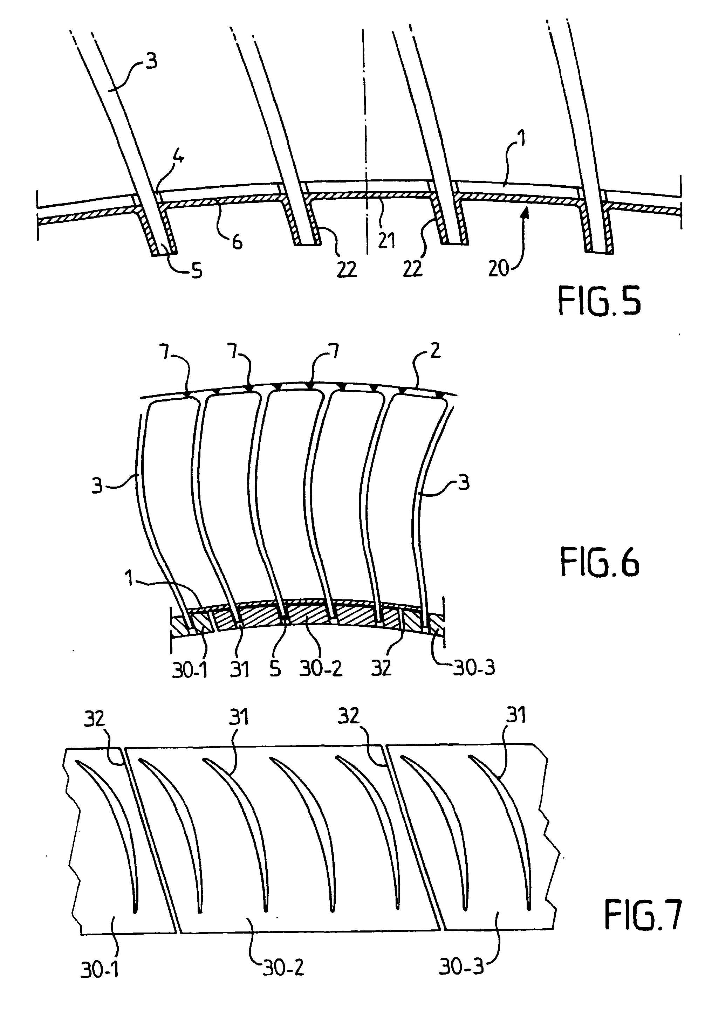

Dans le mode de réalisation de la figure 5, le volume affecté à la composition adhésive est délimité vers l'intérieur de la virole 1 par une multiplicité de pièces 20 en alliage d'aluminium ou de magnésium, dont chacune est interposée entre deux aubes 3 voisines. Chaque pièce 2 présente dans le plan de la figure un profil en U anguleux dont le fond 21 est appliqué contre la face interne 6 de la virole 1 et dont les branches 22 sont appliquées respectivement sur les deux aubes adjacentes. Entre les pièces 20 d'une part, la virole 1 et les régions d'extrémité 5 des aubes d'autre part, est interposé un film mince d'une colle à base de polyimide telle que celle commercialisée par la Société Cytec Fiberite Inc. sous la référence FM 680, cette colle remplissant également les jeux entre les aubes et la périphérie des ouvertures 4. Il est également possible d'utiliser ici une mousse de polyimide telle que celle commercialisée par la Société Cytec Fiberite Inc. sous la référence FM 680-2.

La fixation de la figure 5 peut être réalisée de la manière suivante. On enduit la face interne 6 de la virole et les régions 5 des aubes d'un film mince de colle, puis on insère les pièces 20 qui sont dimensionnées de manière à être maintenues en place par engagement à force avant le durcissement de la colle. Ce dernier est effectué comme dans l'exemple précédent par traitement à chaud.

Le mode de fixation des figures 6 et 7 diffère de celui de la figure 5 en ce que les pièces creuses 20 sont remplacées par des pièces massives 30-1, 30-2, 30-3 réalisées dans une mousse de polyimide telle que celle commercialisée par la Société Dupont de Nemours sous la référence SF-0920, d'une densité de 0,3, dont chacune s'étend sur une longueur d'arc multiple du pas circonférentiel des aubes, et est traversée par des ouvertures 31 pour loger les régions saillantes 5 des aubes. Deux pièces voisines sont séparées par un intervalle étroit 32 situé entre deux aubes voisines. L'assemblage s'effectue de la même manière que dans le cas de la figure 5, les ouvertures 31 pouvant être dimensionnées de manière à permettre le maintien en place des pièces 30-1, 30-2, 30-3 par friction sur les régions 5 des aubes.

## Revendications

1. Redresseur de compresseur de moteur aéronautique comprenant une virole intérieure (1), une virole extérieure (2) et une multiplicité d'aubes (3) réparties dans la direction circonférentielle s'étendant radialement de la virole intérieure à la virole extérieure, chaque aube traversant une ouverture correspondante (4) ménagée dans la virole intérieure et étant fixée à cette dernière au moyen d'un ciment étanche contenant un adhésif polymère organique, **caractérisé en ce que** ledit adhésif est à base de polyimide.

2. Redresseur selon la revendication 1, dans lequel la virole intérieure (1) et/ou les aubes (3) sont en titane.

3. Redresseur selon l'une des revendications 1 et 2, dans lequel des régions d'extrémité (5) des aubes (3) font saillie radialement vers l'intérieur au-delà de la virole intérieure.

4. Redresseur selon l'une des revendications précédentes, dans lequel un insert (10-1, 10-2, 10-3) disposé à l'intérieur de la virole intérieure (1) et au voisinage de celle-ci délimite avec la virole intérieure et avec les aubes (3) un volume (14) qui est rempli dudit ciment.

5. Redresseur selon la revendication 4, dans lequel ledit insert est sous forme d'une nappe souple (10-1, 10-2, 10-3).

6. Redresseur selon la revendication 5, dans lequel la nappe souple forme en regard des extrémités (5) des aubes des poches (11) qui s'éloignent radialement de la virole intérieure.

7. Redresseur selon l'une des revendications 5 et 6, dans lequel la nappe souple est formée de plusieurs éléments (10-1, 10-2, 10-3) se raccordant entre eux dans la direction circonférentielle de la virole intérieure avec recouvrement partiel.

8. Redresseur selon l'une des revendications 5 à 7, dans lequel la nappe souple est un tissu de fibres de verre ou de carbone imprégné de polyimide.

9. Redresseur selon la revendication 4, dans lequel ledit insert est sous forme d'une multiplicité de pièces rigides (20).

10. Redresseur selon la revendication 9, rattachée à la revendication 3, dans lequel chacune desdites pièces rigides (20) est interposée entre les régions saillantes (5) de deux aubes (3) consécutives.

11. Redresseur selon la revendication 10, dans lequel chacune desdites pièces rigides (20) est montée à force entre lesdites régions saillantes (5).

12. Redresseur selon la revendication 9, dans lequel chacune desdites pièces rigides (30-1, 30-2, 30-3) s'étend sur une longueur d'arc supérieure au pas circonférentiel des aubes (3).

13. Redresseur selon la revendication 12, rattachée à la revendication 3, dans lequel lesdites pièces rigides présentent des ouvertures (31) pour recevoir les régions saillantes (5) des aubes (3).

14. Redresseur selon l'une des revendications 9 à 13, dans lequel lesdites pièces rigides (20) sont fixées à la virole intérieure (1) par ledit ciment.

15. Redresseur selon l'une des revendications 9 à 14, dans lequel lesdites pièces rigides (20) sont en alliage d'aluminium ou de magnésium.

16. Redresseur selon l'une des revendications précédentes, dans lequel ledit ciment est sous forme de film.

17. Redresseur selon l'une des revendications 1 à 15, dans lequel ledit ciment est sous forme de mousse.

18. Redresseur selon l'une des revendications précédentes, dans lequel ledit adhésif à base de polyimide est propre à résister sans dégradation à une température d'environ 300 °C lors du fonctionnement du redresseur.

19. Redresseur selon l'une des revendications précédentes, dans lequel les aubes (3) sont fixées à la virole extérieure (2) par soudage (7) par faisceau d'électrons.

## Patentansprüche

1. Kompressorgleichrichter für einen Luftfahrzeugmotor, mit einer inneren Zwinge (1) und einer äußeren Zwinge (2) und einer Mehrzahl von Schaufeln (3), die in Umfangsrichtung verteilt angeordnet sind und sich radial von der inneren Zwinge zur äußeren Zwinge erstrecken, wobei eine jede Schaufel eine entsprechende Öffnung (4) durchquert, die in der inneren Zwinge ausgebildet ist, und an dieser letzteren mit Hilfe eines dichten Zements befestigt ist, der einen organischen Polymerklebstoff enthält, **dadurch gekennzeichnet, dass** der Klebstoff auf der Basis von Polyimid ist.

2. Gleichrichter nach Anspruch 1, bei dem die innere Zwinge (1) und/oder die Schaufeln (3) aus Titan sind.

3. Gleichrichter nach Anspruch 1 oder 2, bei dem die Endabschnitte (5) der Schaufeln (3) radial nach dem Inneren über die innere Zwinge hinaus vorspringen.

4. Gleichrichter nach einem der vorhergehenden Ansprüche, bei dem ein Einsatz (10-1, 10-2, 10-3), der im Inneren der inneren Zwinge (1) und in der Nähe von dieser angeordnet ist, mit der inneren Zwinge und mit den Schaufeln (3) einen Raum (14) begrenzt, der mit dem Zement gefüllt ist.

5. Gleichrichter nach Anspruch 4, bei dem der Einsatz in Form einer nachgiebigen Matte (10-1, 10-2, 10-3) ausgebildet ist.

6. Gleichrichter nach Anspruch 5, bei dem die nachgiebige Matte gegenüber den Enden (5) der Schaufeln Taschen (11) bildet, die sich radial von der inneren Zwinge ausdehnen.

7. Gleichrichter nach Anspruch 5 oder 6, bei dem die nachgiebige Matte aus mehreren Elementen (10-1, 10-2, 10-3) gebildet ist, die untereinander in Umfangsrichtung der inneren Zwinge mit teilweiser Überdeckung verbunden sind.

8. Gleichrichter nach einem der Ansprüche 5 bis 7, bei dem die nachgiebige Matte ein Gewebe aus Glasfasern oder Karbonfasern ist, das mit Polyimid imprägniert ist.

9. Gleichrichter nach Anspruch 4, bei dem der Einsatz in Form einer Mehrzahl von starren Elementen (20) gebildet ist.

10. Gleichrichter nach Anspruch 9, verbunden mit dem Anspruch 3, bei dem ein jedes der starren Teile (20) zwischen die vorspringenden Abschnitte (5) von zwei aufeinander folgenden Schaufeln (3) gesetzt ist.

11. Gleichrichter nach Anspruch 10, bei dem ein jedes der starren Teile (20) unter Zwang zwischen die vorspringende Abschnitte (5) montiert ist.

12. Gleichrichter nach Anspruch 9, bei dem ein jedes der starren Teile (30-1, 30- 2, 30-3) sich über eine Bogenlänge erstreckt, die größer ist als die Umfangsteilung der Schaufeln (3).

13. Gleichrichter nach Anspruch 12 in Verbindung mit Anspruch 3, bei dem die starren Teile Öffnungen (31) aufweisen, um die vorspringenden Abschnitte (5) der Schaufeln (3) aufzunehmen.

14. Gleichrichter nach einem der Ansprüche 9 bis 13, bei dem die starren Teile (20) an der inneren Zwinge (1) durch den Zement befestigt sind.

15. Gleichrichter nach einem der Ansprüche 9 bis 14, bei dem die starren Teile (20) aus einer Aluminium- oder Magnesiumlegierung gebildet sind.

16. Gleichrichter nach einem der vorhergehenden Ansprüche, bei dem der Zement in Form eines Films vorliegt.

17. Gleichrichter nach einem der Ansprüche 1 bis 15, bei dem der Zement in Form von Schaum vorliegt.

18. Gleichrichter nach einem der vorhergehenden Ansprüche, bei dem der Klebstoff auf der Basis von Polyimid in der Lage ist, ohne Beschädigung einer Temperatur von ungefähr 300 °C beim Betrieb des Gleichrichters zu widerstehen.

19. Gleichrichter nach einem der vorhergehenden Ansprüche, bei dem die Schaufeln (3) an der äußeren Zwinge (2) durch Schweißen (7) durch Elektronenstrahl befestigt sind.

## Claims

1. Stator of a compressor for aeronautic engine comprising an inner ferrule (1), an outer ferrule (2) and a plurality of blades (3) distributed in the circumferential direction extending radially from the inner ferrule to the outer ferrule, each blade traversing a corresponding aperture (4) formed in the inner ferrule and being fixed thereto by means of a sealing-tight cement containing an organic polymeric adhesive, **characterised in that** said adhesive has a polyimide base.

2. Stator according to claim 1, wherein the inner ferrule (1) and/or the blades (3) are made of titanium.

3. Stator according to either of claims 1 and 2, wherein end regions (5) of the blades (3) project radially inwards beyond the inner ferrule.

4. Stator according to one of the preceding claims, wherein an insert (10-1, 10-2, 10-3) disposed inside the inner ferrule (1) and in the vicinity thereof defines with the inner ferrule and with the blades (3) a volume (14) which is filled with said cement.

5. Stator according to claim 4, wherein said insert is in the form of a flexible web (10-1, 10-2, 10-3).

6. Stator according to claim 5, wherein the flexible web forms pockets (11) opposite the ends (5) of the blades, which pockets extend away radially from the inner ferrule.

7. Stator according to either of claims 5 and 6, wherein the flexible web is formed of plural elements (10-1, 10-2, 10-3) joined together in the circumferential direction of the inner ferrule with a partial overlap.

8. Stator according to one of claims 5 to 7, wherein the flexible web is a fibreglass fabric or carbon fabric impregnated with polyimide.

9. Stator according to claim 4, wherein said insert is formed of a plurality of rigid members (20).

10. Stator according to claim 9, in combination with claim 3, wherein each of said rigid members (20) is interposed between the projecting regions (5) of two consecutive blades (3).

11. Stator according to claim 10, wherein each of said rigid members (20) is mounted with force between said projecting regions (5).

12. Stator according to claim 9, wherein each of said rigid members (30-1, 30-2, 30-3) extends over a length of arc greater than the circumferential pitch of the blades (3).

13. Stator according to claim 12, in combination with claim 3, wherein said rigid members have apertures (31) for receiving the projecting regions (5) of the blades (3).

14. Stator according to one of claims 9 to 13, wherein said rigid members (20) are fixed to the inner ferrule (1) by said cement.

15. Stator according to one of claims 9 to 14, wherein said rigid members (20) are made of aluminium or magnesium alloy.

16. Stator according to one of the preceding claims, wherein said cement is in the form of a film.

17. Stator according to one of claims 1 to 15, wherein said cement is in the form of a foam.

18. Stator according to one of the preceding claims, wherein said adhesive with a polyimide base is capable of resisting a temperature of about 300 °C without deterioration during operation of the stator.

19. Stator according to one of the preceding claims, wherein the blades (3) are fixed to the outer ferrule (2) by electron-beam welding (7).
